# EUROPEAN PATENT APPLICATION

(11) **EP 2 530 278 A1**
(43) Date of publication of application: **05.12.2012**
(21) Application number: 11168470.0
(22) Date of filing: 01.06.2011
(51) Int. Cl.: F02C 3/34, F02C 6/18, C01B 13/08, F01K 23/10, F23L 7/00, F02C 3/20

(54) **Flue gas recirculation system and method**

(71) Applicant: Alstom Technology Ltd, 5400 Baden (CH)
(72) Inventor: Agostinelli, Gian-Luigi, 8048 Zurich (CH); Carroni, Richard, 5443 Niederrohrdorf (CH); Koss, Peter Ulrich, 8702 Zollikon (CH); Brautsch, Andreas A., 5030 Würenlingen (CH)
(74) Representative: Bratt, Hanna Catharina

(57) **Abstract**

In a system and a method for gas turbine flue gas recirculation for recirculating at least a portion of a flue gas generated in the gas turbine of a gas turbine power generation system an oxygen feed unit (18) is arranged to bring a recirculated flue gas stream (14) into contact with an oxygen enriched oxygen carrier material, wherein the carrier material is transferred to an oxygen depleted state by releasing oxygen to the recirculated flue gas stream (14) such that an oxygen enriched flue gas stream (9) is formed. A duct (10) is arranged for forwarding the oxygen enriched flue gas stream (9) to a gas turbine (4), and an oxygen scrubber unit (19) is arranged to receive at least a portion of the oxygen depleted oxygen carrier material from the oxygen feed unit (18), to bring an oxygen containing gas stream (21) into contact with the oxygen depleted oxygen carrier material, wherein the oxygen carrier material is transferred to an oxygen enriched state by capturing oxygen from the oxygen containing gas stream (21), such that an oxygen depleted gas stream (22) is formed, and to return at least a portion of the oxygen enriched oxygen carrier material to the oxygen feed unit (18).

## Description

### Technical field

The present invention relates to methods and systems for flue gas recirculation in a gas turbine power generation system.

### Background

In recent years it has become obvious that the generation of greenhouse gases leads to global warming and that further increase in greenhouse gas production will accelerate global warming. Since carbon dioxide (CO₂) is identified as a main greenhouse gas, carbon capture and storage (CCS) is considered as one of the potential major means to reduce the release of greenhouse gases into the atmosphere and to control global warming. In this context CCS is defined as the process of CO₂ capture, compression, transport and storage. Capture is defined as a process in which CO₂ is removed either from the flue gases after combustion of a carbon based fuel or the removal of and processing of carbon before combustion. Regeneration of any absorbents, adsorbents or other means to remove CO₂ from a flue gas or fuel gas flow is considered to be part of the capture process.

Post combustion CO₂ capture is a commercially promising technology for fossil fuelled power plants including combined cycle power plants (CCPP). In post-combustion capture the CO₂ is removed from a flue gas. The remaining flue gas is released to the atmosphere and the CO₂ is compressed for transportation, and storage. There are several technologies known to remove CO₂ from a flue gas such as absorption, adsorption, membrane separation, and cryogenic separation.

All known technologies for CO₂ capture require relatively large amounts of energy. Due to the relatively low CO₂ concentration of only about 4 percent in the flue gases of a conventional CCPP, the CO₂ capture unit for a conventional CCPP will be more costly and energy consuming per kg of captured CO₂ than the ones for other types of fossil power plants, like coal fired plants, which have a relatively higher CO₂ concentration.

The CO₂ concentration in the CCPP flue gas depends on the fuel composition, gas turbine type and load and may vary substantially depending on the operating conditions of the gas turbine. This variation in the CO₂ concentration can be detrimental to the performance, efficiency, and operatability of the CO₂ capture unit.

To increase the CO₂ concentration in the flue gases of a CCPP various methods for recirculation of flue gases is known, as for example described by WO 2010/072710. These methods reduce the total amount of flue gas and increase the CO₂ concentration, and thereby reduce the required flow capacity of an absorber, the power consumption of the capture system, the capital expenditure for the capture system, and increase the CO₂ capture unit's efficiency.

Ideally, the amount of CO₂ recirculated should be as high as possible, in order to increase the CO₂ concentration and reduce the flue flow rate to be treated in the CO₂ capture unit. On the other hand, the gas turbine combustion chamber must have a minimum oxygen concentration to guarantee correct combustion. This in turn means that the amount of flue gas flow that may be recirculated is limited, in order to make sure that at least the minimum needed amount of oxygen is available to the combustion chamber.

WO 2010/072710 discloses increasing the flue gas recirculation rate by admixing of oxygen or oxygen enriched air from an air separation unit based on cryogenic separation, by which the oxygen concentration is kept to meet the minimum required level. In WO 2010/072710 it is noted that admixing of oxygen or oxygen enriched air can be applied as far as justified considering the trade off of an air separation unit and CO₂ capture system's performances and costs. It may be noted that the operation of such an air separation unit is not inexpensive in terms of capital cost and auxiliary consumptions.

### Summary

According to aspects illustrated herein there is provided a system and a method for flue gas recirculation by which the amount of recirculated flue gas may be increased in a gas turbine power generation system.

According to one aspect illustrated herein, there is provided a gas turbine flue gas recirculation system for recirculating at least a portion of a flue gas generated in a gas turbine of a gas turbine power generation system, comprising
an oxygen feed unit arranged to bring a recirculated flue gas stream into contact with an oxygen enriched oxygen carrier material, wherein the oxygen carrier material is transferred to an oxygen depleted state by releasing oxygen to the recirculated flue gas stream such that an oxygen enriched flue gas stream is formed, and
a duct for forwarding the oxygen enriched flue gas stream to a gas turbine,
an oxygen scrubber unit arranged to receive at least a portion of the oxygen depleted oxygen carrier material from the oxygen feed unit, to bring an oxygen containing gas stream into contact with the oxygen depleted oxygen carrier material, wherein the oxygen carrier material is transferred to an oxygen enriched state by capturing oxygen from the oxygen containing gas stream, such that an oxygen depleted gas stream is formed, and to return at least a portion of the oxygen enriched oxygen carrier material to the oxygen feed unit.

According to other aspects illustrated herein, a combined cycle bas turbine power plant is provided which comprises such a gas turbine flue gas recirculation system.

According to other aspects illustrated herein, a method for recirculating at least a portion of a flue gas in a gas turbine power generation system comprises the steps of:
bringing a recirculated flue gas stream into contact with an oxygen enriched oxygen carrier material, wherein the carrier material is transferred to an oxygen depleted state by releasing oxygen to the flue gas stream such that an oxygen enriched flue gas stream is formed,
forwarding the oxygen enriched flue gas stream to a gas turbine,
bringing an oxygen containing gas stream into contact with the oxygen depleted oxygen carrier material, wherein the carrier material is transferred to an oxygen enriched state by capturing oxygen from the gas stream, such that an oxygen depleted gas stream is formed, and
bringing the oxygen enriched oxygen carrier material thus formed into renewed contact with the recirculated flue gas stream.
The above described and other features are exemplified by the following figures and detailed description.

### Brief description of the drawings

Referring now to the figures, which are exemplary embodiments, and wherein the like elements are numbered alike:
Fig 1 shows a gas turbine power generation system having a flue gas recirculation system,
Fig 2 shows a variant of the gas turbine power generation system, and
Fig 3 shows another variant of the gas turbine power generation system.

### Detailed description of preferred embodiments

A gas turbine based power generation system 1 where the proposed system and methods for flue gas recirculation may be used comprises a conventional CCPP, the system for flue gas recirculation 2, and a CO₂ capture unit 3.

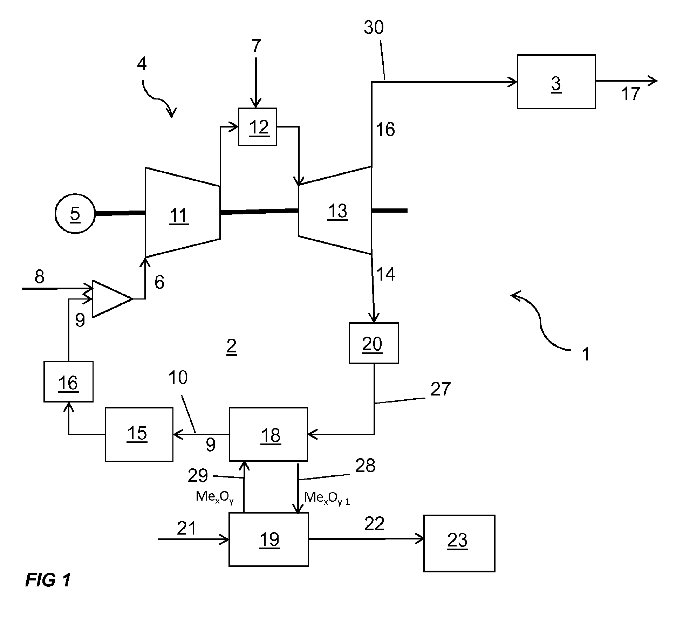

An arrangement with post combustion CO₂ capture, and flue gas recirculation is shown in Fig. 1. A gas turbine 4, which drives a generator 5, is supplied with compressor inlet gas 6, and fuel 7. The compressor inlet gas 6 is a mixture of ambient air 8, and flue gas 9, which is recirculated via a duct 10. The inlet gas 6 is compressed in a compressor 11. The compressed gas is used for combustion of the fuel 7 in a combustor 12, and the pressurized hot gases expand in a turbine 13. Its main outputs are electric power, and hot flue gases. It may be noted that the disclosed system and methods for flue gas recirculation are also useful in combination with a reheat gas turbine, wherein more than one combustor and turbine are present.

A first partial flow 14 of the flue gases, i.e. a portion of the flue gas, is recirculated via the flue gas recirculation system 2 to the inlet of the compressor 11 of the gas turbine 4 where it is mixed with ambient air 8. It may be noted that it would also be possible to recirculate the flue gases to another gas turbine than the gas turbine actually generating the flue gas.

On its way to the compressor inlet, the recirculated flue gas usually passes a heat recovery steam generator (HRSG) 15 that recovers heat from a the hot flue gas stream. The HRSG 15 produces steam that can be used to drive a steam turbine (not shown). The flue gas may be cooled in a flue gas cooler 16 prior to being mixed with ambient air 8.

A second partial flow 16 of the flue gases is fed to the CO₂ capture unit 3 via a duct 30 to be treated in order to extract the CO₂ and store it in a conventional storage plant, and the CO₂ depleted flue gas 17 is released from the CO₂ capture unit 3 to the environment. The process of extracting and storing the CO₂ is often denoted sequestration.

It may be noted that the system for flue gas recirculation also may be useful in a CCPP without CO₂ capture. Increasing the amount of recirculated flue gas could then be used for increasing the combustion temperature or for increasing the amount of NOₓ in the flue gas, for a NOₓ capture unit to operate more efficiently.

The flue gas recirculation system comprises an oxygen feed unit 18 and an oxygen scrubber unit 19. The hot flue gas from the turbine 13 is fed via a duct 27 to the oxygen feed unit 18 where it is brought into contact with an oxygen enriched oxygen carrier material which releases oxygen to the hot flue gas to form an oxygen enriched flue gas stream 9.

Hot flue gas is in this context to be understood as the flue gas being at a high enough temperature to cause oxygen to be released from a particular oxygen carrier material at a desired rate. A typical temperature range which causes oxygen carrier materials, such as the metal oxides discussed more in detail below, to release oxygen is 400°C― 1000°C, and the typical gas turbine exhaust flue gas temperature is within this range. The temperature may be increased if desired by heating the recirculated flue gas stream 14 in an optional supplemental firing unit 20 prior to the flue gas stream 14 entering the oxygen feeder unit 18.

The oxygen carrier material is transferred to an oxygen depleted state when releasing oxygen to the hot flue gas. The oxygen depleted oxygen carrier material, or at least a portion thereof, is fed via a pipe 28 to the oxygen scrubber unit 19 where it is brought into contact with a stream 21 of oxygen containing gas, such as air, or another gas containing a minimum of 10% oxygen. The oxygen depleted oxygen carrier material absorbs or captures oxygen from the gas stream 21, in which process the oxygen carrier material is transferred to its oxygen enriched state and a stream 22 of oxygen depleted gas is formed.

The oxygen depleted air stream 22 will contain a certain amount of heat from the exothermic process in the oxygen scrubber unit 19, and this heat may be recovered in an HRSG 23, to produce steam that can be used to drive a steam turbine (not shown).

The oxygen enriched oxygen carrier material is then fed back via a pipe 29 to the oxygen feed unit 18 to again release oxygen to the flue gas in a repeating cycle.

This process of releasing and capturing oxygen may be denoted chemical looping, and a similar process is used in chemical looping combustion, which may be utilized in electrical power generation plants which burn fuels such as coal, biomass, and other opportunity fuels. Such chemical looping combustion, as described e.g.in WO09111380, utilizes a high temperature process, whereby solids such as calcium or metal based compounds, for example, are "looped" between a first reactor, called an oxidizer, and a second reactor, called a reducer. In the oxidizer, oxygen from air injected into the oxidizer is captured by the solids in an oxidation reaction. The captured oxygen is then carried by the oxidized solids to the reducer to be used for combustion and/or gasification of a fuel such as coal, for example. After a reduction reaction in the reducer, the solids, no longer having the captured oxygen, are returned to the oxidizer to be oxidized again, and the cycle repeats.

In the system and method illustrated herein, the oxygen is instead released to the recirculated hot flue gases, thereby increasing the oxygen content in the recirculated flue gas, in turn making a higher flue gas recirculation ratio possible in a gas turbine power generation system. The oxygen carrier material may also here be in the form of a metal oxide, such as nickel oxide, copper oxide or iron oxide. Another choice is to use natural ore ilmenite. It may be noted that the choice of oxygen carrier material is not limited to those materials mentioned herein; in fact any kind of O₂ enrichment process using dry chemistry may be employed. In fig 1, the oxygen carrier material is denoted MeₓO_{y} in its oxygen enriched state and MeₓO_{y-1} in its oxygen depleted stage, but it may be noted that this notation is merely for illustrational purposes.

The oxygen carrier material may be supplied in the form of a solid material, such as in the form of a powder or small particles, which has the advantage of providing a large contact area increasing the gas to solid mass transfer ratio and in turn reducing the required reaction time.

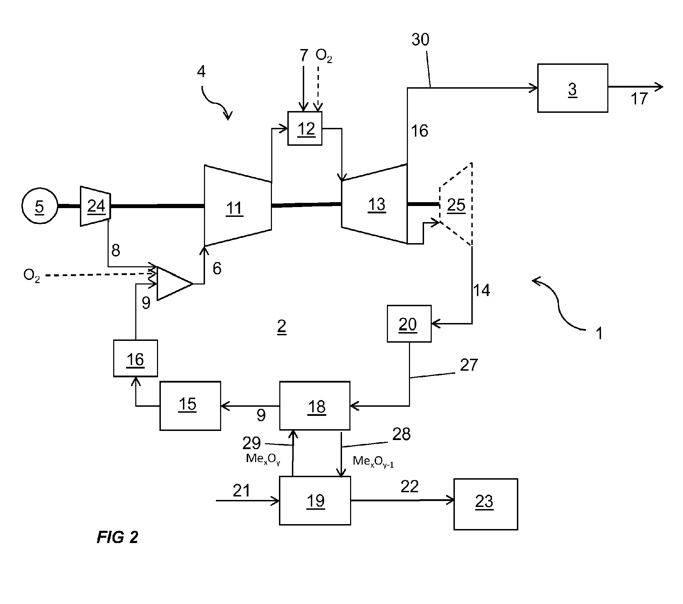

In fig 2 an air compressor 24 is added to the gas turbine system. The compressor 24 provides a precompression of the ambient air 8, which in turn means that both the flue gas recirculation and the CO₂ capture takes place in a pressurized state. This may be advantageous for providing a more efficient operation of the CO₂ capture unit and the flue gas recirculation system 2, as the volumetric flow through the system is lowered when operating the system under pressure. As a further option, another turbine 25 may be provided, such that the CO₂ unit still operates under pressure, while the fuel gas recirculation system operates in atmospheric pressure as in the system shown in fig 1.

Both the system shown in fig 1 and the system shown in fig 2 may be designed to increase the CO₂ content in the flue gas from around 15 to around 75 % which means that a cryogenic purification may be used in the CO₂ capture unit 3. The design flue gas recirculation ratio and consequently the design percentage of CO₂ in the flue gas may be achieved at design conditions or kept during transients by adopting in combination with additional oxygen being mixed with the ambient air 8 as shown in dashed lines in Fig 2, and the recirculated oxygen enriched flue gas 9 when fed to the compressor 11. The additional oxygen may as an alternative or additionally be injected into the combustion chamber 12, as shown in dashed lines in Fig 2. The additional oxygen feed into the system may in turn allow for faster transients and more flexibility during plant operation.

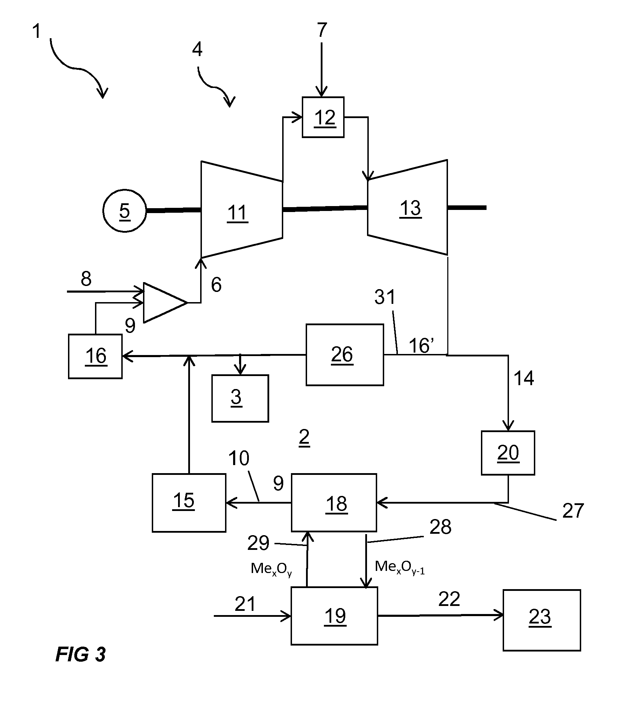

In fig 3 an alternative arrangement of the flue gas recirculation system 2 is shown. In this system the flue gas is split after the gas turbine into two streams 14 and 16'. The stream 16' is led via a duct 31 to pass through a main HRSG 26, while the other stream passes through the flue gas recirculation system 2 in the same manner as described in connection with fig 1 and 2. The HRSG 15 again recovers the heat from the hot flue gas including the added heat from the exothermic process in the oxygen feeder unit 18, while the main HRSG 26 recovers the heat from the hot flue gas stream 16'. The steam from the HRSG 15 may either be used in the main water steam cycle or it may be used directly in the CO₂ capture unit. This alternative makes it possible to avoid contact between the main HRSG 26 and the oxygen enriched flue gas, which is advantageous in a case where the oxygen feeder operating temperatures is not compatible with a typical CCPP HRSG. It also limits the fouling by dust from the oxygen carrier material to a smaller area, which in turn means that this area can be cleaned without affecting the main steam production for the power generation.

As a further alternative, it may also be possible to combine the arrangements shown in fig 1 and fig 2 with the arrangement shown in fig 3, such that the flue gas stream from the turbine 13 is divided into three streams, one going to the CO2 capture unit, corresponding to stream 16, one going to a main HRSG 26, corresponding to stream 16', but with no diversion to a CO2 capture unit, and then back to the gas turbine, and the third stream corresponding to stream 14 passing the oxygen feed unit 18 and then going back to the gas turbine.

A method for recirculating at least a portion of a flue gas in a gas turbine power generation system comprises the steps of
bringing a recirculated flue gas stream 14 into contact with an oxygen enriched oxygen carrier material, wherein the carrier material is transferred to an oxygen depleted state by releasing oxygen to the flue gas stream 14 such that an oxygen enriched flue gas stream 9 is formed,
forwarding the oxygen enriched flue gas stream 9 to a gas turbine 4,
bringing an oxygen containing gas stream 21 into contact with the oxygen depleted oxygen carrier material, wherein the carrier material is transferred to an oxygen enriched state by capturing oxygen from the gas stream 21, such that an oxygen depleted gas stream 22 is formed, and
bringing the oxygen enriched oxygen carrier material thus formed into renewed contact with the recirculated flue gas stream 14.

These steps are thus performed in a cycling or repeating manner, such that the oxygen carrier material is continuously fed between the oxygen feeder unit, where it is transferred from the oxygen enriched state to the oxygen depleted state, and the oxygen scrubber unit where it is transferred from the oxygen depleted state to the oxygen enriched state. The term continuously as used in this context obviously allows for pausing the process e.g. in case cleaning is needed.

The systems and methods for flue gas recirculation illustrated herein provides an energy efficient and cost effective way of increasing the oxygen content in the recirculated flue gas, making an increase in the flue gas recirculation ratio possible. This in turn means that the carbon dioxide content in the flue gas is increased, providing for a more efficient operation of a carbon dioxide capture process. The increased flue gas recirculation ratio which may be achieved using the herein illustrated flue gas recirculation systems and methods also provide the advantage of enabling a higher combustion temperature and an increase in the content of nitric oxides NOₓ in the flue gases for a more efficient NOₓ removal process.

While the invention has been described with reference to a number of preferred embodiments, it will be understood by those skilled in the art that various changes may be made and equivalents may be substituted for elements thereof without departing from the scope of the present invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A gas turbine flue gas recirculation system for recirculating at least a portion of a flue gas generated in a gas turbine of a gas turbine power generation system, comprising
an oxygen feed unit (18) arranged to bring a recirculated flue gas stream (14) into contact with an oxygen enriched oxygen carrier material, wherein the oxygen carrier material is transferred to an oxygen depleted state by releasing oxygen to the recirculated flue gas stream (14) such that an oxygen enriched flue gas stream (9) is formed, and
a duct (10) for forwarding the oxygen enriched flue gas stream (9) to a gas turbine (4),
an oxygen scrubber unit (19) arranged to receive at least a portion of the oxygen depleted oxygen carrier material from the oxygen feed unit (18), to bring an oxygen containing gas stream (21) into contact with the oxygen depleted oxygen carrier material, wherein the oxygen carrier material is transferred to an oxygen enriched state by capturing oxygen from the oxygen containing gas stream (21), such that an oxygen depleted gas stream (22) is formed, and to return at least a portion of the oxygen enriched oxygen carrier material to the oxygen feed unit (18).

2. The system of any of the preceding claims, further comprising a supplemental firing unit (20) for heating the flue gas stream (14) upstream of the oxygen feeder unit (18).

3. The system of any of the preceding claims, the system being arranged to split a flue gas stream generated in the gas turbine (4) into a first stream, being the recirculated flue gas stream (14) passing through the oxygen feed unit (18) and a second stream (16) which is fed to a carbon dioxide capture unit (3).

4. The system of any of the preceding claims, wherein the system further comprises a first heat recovery steam generator (15) arranged downstream of the oxygen feed unit (18) to recover heat from the oxygen enriched flue gas stream (9).

5. The system of any of the claims 1-3, the system being arranged to split the recirculated flue gas stream into a first stream passing through the oxygen feed unit (18) and a second stream (16) which at least partly is fed to a carbon dioxide capture unit (3),
wherein the system (2) further comprises
a first heat recovery steam generator (15) which is arranged to recover heat from the first flue gas stream (9) downstream of the oxygen feed unit (18), and
a second heat recovery steam generator (26) which is arranged to recover heat from the second stream (16) upstream of the carbon dioxide capture unit (3).

6. The system of any of the preceding claims, further comprising a third heat recovery steam generator (23) which is arranged to recover heat from the oxygen depleted gas stream (22).

7. The system of any of the preceding claims, wherein the oxygen carrier material comprises a metal oxide.

8. The system of any of the preceding claims, wherein the oxygen carrier material is in the form of a powder or small particles.

9. The system of any of the preceding claims, wherein the temperature of the recirculated flue gas which is brought into contact with the oxygen carrier material is 400°C - 1000°C.

10. A combined cycle gas turbine power plant comprising a gas turbine flue gas recirculation system according to any of claims 1-7.

11. The combined cycle power plant of claim 8, further comprising a carbon dioxide capture unit (3) for sequestration of carbon dioxide from flue gas generated in the combined cycle gas turbine power plant.

12. A method for recirculating at least a portion of a flue gas in a gas turbine power generation system, comprising the steps of:
bringing a recirculated flue gas stream (14) into contact with an oxygen enriched oxygen carrier material, wherein the carrier material is transferred to an oxygen depleted state by releasing oxygen to the flue gas stream (14) such that an oxygen enriched flue gas stream (9) is formed,
forwarding the oxygen enriched flue gas stream (9) to a gas turbine (4),
bringing an oxygen containing gas stream (21) into contact with the oxygen depleted oxygen carrier material, wherein the carrier material is transferred to an oxygen enriched state by capturing oxygen from the gas stream (21), such that an oxygen depleted gas stream (22) is formed, and
bringing the oxygen enriched oxygen carrier material thus formed into renewed contact with the recirculated flue gas stream (14).

13. The method of claim 12, further comprising the step of heating the recirculated flue gas stream (14) prior to the step of bringing the flue gas stream (14) in contact with the oxygen enriched carrier material.

14. The method of claim 12 or 13, wherein the temperature of the recirculated flue gas stream (14) is 400°C ―1000°C.

15. The method of any of claims 12-14, further comprising the step of recovering heat from the oxygen depleted gas stream (22).
